# EUROPEAN PATENT APPLICATION

(11) **EP 4 764 449 A1**
(43) Date of publication of application: **24.06.2026**
(21) Application number: 24221745.3
(22) Date of filing: 19.12.2024
(51) Int. Cl.: G01N 1/10, G01N 1/20

(54) **SYSTEM AND METHOD FOR BATTERY MANUFACTURING**

(71) Applicant: LG Energy Solution, Ltd., Seoul 07335 (KR)
(72) Inventor: LEE, Gyu Sun, 34122 Daejeon (KR); HONG, Jong Hyuk, 34122 Daejeon (KR); CHOI, Jin Hyeong, 34122 Daejeon (KR)
(74) Representative: Goddar, Heinz J.

(57) **Abstract**

Disclosed herein is a battery manufacturing system comprising at least one intermediate conduit or intermediate container configured to receive a battery material mixture from a reactor configured for making the battery material mixture; and at least one measuring device configured to determine a physical property of the mixture in the at least one intermediate conduit or intermediate container downstream of the reactor.

## Description

### BACKGROUND

The present invention relates to a battery manufacturing system and a battery manufacturing method. In particular, the present invention relates to a manufacturing system and corresponding method for preparing a battery material mixture for usage in a battery, which may include preparing the battery material mixture and coating an electrode substrate with the prepared mixture.

In modern society, portable devices such mobile phones, notebook computers, camcorders and digital cameras are popular. Chargeable/dischargeable secondary batteries have become indispensable power sources for electric vehicles (EV), hybrid electric vehicles (HEV), plug-in hybrid electric vehicles (P-HEV) and the like, in the attempt to reduce air pollution, decrease carbon dioxide emissions, and the like, caused by existing combustion engine vehicles using fossil fuel. Therefore, there is a growing need for improvements of secondary batteries.

Currently commercialized secondary batteries include nickel cadmium batteries, nickel hydrogen batteries, nickel zinc batteries, and lithium secondary batteries. Among these, the lithium secondary batteries have come into the spotlight because of various beneficial aspects, for example, they hardly exhibit memory effects compared to nickel-based secondary batteries and thus may be liberally charged and discharged, and they display very low self-discharge rates and high energy density.

Secondary batteries may be classified based on the shape of battery case into cylindrical batteries having an electrode assembly mounted in a cylindrical metal can, prismatic batteries having an electrode assembly mounted in a prismatic metal can, and pouch-type batteries. The pouch-type secondary batteries generally accommodate an electrode assembly having a structure in which electrodes and separators are alternately arranged within a pouch-shaped case made of a laminated aluminum sheet.

Further, the secondary batteries may be classified based on the structure in which a cathode and an anode are stacked with a separator being interposed between the cathode and the anode. Typically, there may be a jelly-roll (wound) type structure in which a long sheet type cathode and a long sheet type anode are wound with a separator being interposed between the cathode and the anode, or a stacked (laminated) type structure in which pluralities of cathodes and anodes, cut into predetermined unit sizes, are sequentially stacked with separators being interposed between the cathodes and the anodes, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly.

The electrodes, that is, the cathode and the anode, are typically formed in a process in which electrode substrate is processed into an electrode by coating the electrode substrate with an active material layer. The active material layer is typically applied onto the electrode substrate as a battery material mixture. The battery material mixture typically consists of substances which include an active material, a binder and a solvent. The battery material mixture may also contain additional substances. The battery material mixture is sometimes referred to as "slurry" due to its viscosity. The quality of the battery material mixture is important for the quality of the active material layer coated onto the substrate.

In conventional processes, it is difficult to predict or measure physical parameters of a battery material mixture downstream of the reactor in which the contents are mixed. In order to measure the contents of a battery material mixture inside the reactor where the substances are mixed, the preparation has to be interrupted or measurements have to be derived from machine parameters which may be subjected to disturbances. Further, the results of measurements taken in the reactor may not be a reliable indicator because the substances are sometimes not blended when a sample is taken. The precise physical properties of the actual battery material mixture delivered from the reactor to a coating device is unknown. If the quality of the manufacturing process evaluated based on one or both sides of the coated active material layer on the electrode substrate shows suboptimal quality, this may lead to unwanted amounts of waste.

Against this background, it is desired to increase the yield and quality of the battery manufacturing, particularly with respect to the active material coating on the electrodes.

### SUMMARY

It is an object of this invention to provide a battery manufacturing system and a battery manufacturing method that overcomes one or more of the disadvantages of known battery manufacturing systems and battery manufacturing methods.

The technical problems known from the prior art are solved by the invention as defined by the independent claims. Particular examples of the invention are given by the additional features of the dependent claims.

According to an aspect of the present disclosure, a battery manufacturing system is provided. The battery manufacturing system (short: system) comprises at least one intermediate conduit or intermediate container configured to receive a battery material mixture (short: mixture) from a reactor. Alternatively or additionally, the battery manufacturing system may comprise at least one intermediate conduit or intermediate container configured to provide the battery material mixture to at least one deposition device. The system further comprises at least one measuring device, in particular a rheological measuring device, configured to determine a physical property, in particular a rheological property, of the mixture. The rheological measuring device may be realized as a rheometer.

The reactor may be configured for making the battery material mixture, in particular from substances including an active material, a binder and a solvent. A reactor may be referred to as main mixer. At least one of the substances may be provided to the reactor as a solid. At least one of the substances may be provided to the reactor as a liquid. In particular, the substances include at least one solid and at least on liquid. For example, the substances may include the active material in solid form, the solvent in liquid form and the binder in solid or liquid form. The reactor may in particular be configured to create a viscous battery material mix (slurry) from at least one solid and at least one liquid substance. In particular, the reactor may be configured to operate continuously. Alternatively or additionally, the reactor may be configured to be operated in intervals. The reactor may be configured to blend the substances into a battery material mixture. The reactor may be configured to create an, in particular homogeneous, battery material mixture from substances which substances include at least one active material, at least one solvent and at least one binder. The reactor may be configured to mechanically mix the substances of the battery material mix, for example by shaking, stirring and/or kneading. The reactor may be equipped with one, two, three, or more than three, injection devices configured to insert a predetermined amount of at least one substance into the reactor. In particular, the reactor may be equipped with a first injection device configured to insert a predetermined amount of active material, a second injection device configured to insert a predetermined amount of a solvent, and a third injection device configured to insert a predetermined amount of a binder. The at least one injection device may be connected to a reactor control unit which is configured to control the at least one injection device to provide predetermined amounts of the substances intended to form the battery material mixture. The at least one injection device may be configured to insert the predetermined amount of at least one substance continuously at a predetermined rate and/or to insert the predetermined amount of at least one substance intermittently in predetermined portions.

The at least one deposition device may be configured for applying the battery material mixture onto an electrode substrate. The at least one deposition device may in particular be configured for applying the battery material mixture to make a positive electrode or a negative electrode. The deposition device may be configured to supply the battery material mixture onto a surface of the electrode substrate in a laminar, continuous and/or covering manner. The deposition device may include one or more nozzles to dispense the battery material mixture. The deposition device may include at least one roller for guiding the electrode substrate through the deposition device while the electrode substrate is covered with the battery material mixture. The deposition device may include at least one roller and at least one nozzle facing the roller. In particular, the at least one deposition device may be realized as a die coater. The system may comprise at least two deposition devices, in particular a first deposition device configured to apply the active material mixture to a first side of an electrode substrate, and a second deposition device configured to apply the active material mixture to a second side of the electrode substrate opposite to the first side. In a system comprising two deposition devices, the first and the second deposition devices may both be associated with the same reactor. The first deposition device may be associated with a first supply line connected to the reactor, and the second deposition device may be associated with a second supply line connected to the reactor. The first supply line may include at least one intermediate conduit and/or at least one intermediate container.

An intermediate conduit may be provided for conveying the battery material mixture within the battery manufacturing system. An intermediate conduit may be configured for conveying the battery material mixture from the reactor towards the at least one deposition device. Alternatively or additionally, an intermediate conduit may be provided to connect the reactor to an intermediate container, to connect a first intermediate container to a second intermediate container, or to connect an intermediate container to the at least one deposition device. An intermediate conduit may in particular be realized as a pipe, tube, distributor junction (e.g. T-junction or Y-junction) or the like.

An intermediate container may generally be a receptacle configured to hold a predetermined volume of the battery material mixture. At least one intermediate conduit (inlet conduit) may be attached to the intermediate container through which the container may receive the battery material mixture. Alternatively or additionally, at least one intermediate conduit (outlet conduit) may be attached to the intermediate container through which the container may dispense the battery material mixture from said container. The intermediate container may in particular be configured to hold the battery material mixture at a low flow velocity or at a flow velocity of zero. The intermediate container may include one or more circulation means, such as a stirrer, which may in particular be configured to avoid segregation, agglomerates or sedimentation to occur in a resting battery material mixture within the intermediate container. The at least one intermediate container may be a stationary container and/or a moveable container. A moveable container may be attached to at least one conveyor means, such as a rail or belt, or movement means, such as wheels. The system may include two, three, four, five, six, or more than six intermediate containers.

The at least one measuring device may be configured to determine a physical property of the mixture. In particular, the measuring device may be a rheological measuring device configured to determine a rheological property of the mixture. The rheological measuring device may comprise or consist of a rheometer. The at least one rheological measuring device may in particular be configured to determine the viscoelasticity of the mixture and/or the viscosity, in particular the dynamic viscosity, of the mixture. Alternatively, the at least one rheological measuring device may be configured to determine only either the viscoelasticity of the mixture or the viscosity of the mixture. The at least one rheological measuring device may in particular be configured to determine a shear-rheological property of the mixture.

By using a system with at least one measuring device, in particular rheological measuring device, the physical property, in particular rheological property, of the mixture can be measured while the active battery material is being prepared for coating onto an electrode substrate. The system allows the reactor to operate continuously, without interruptions or other disturbances for measuring the physical property of the substances in the mixture. By using the system as described herein, it is not necessary to wait for measurements on the finished electrode or of the slurry dispensed by the deposition device, which can only be obtained with a significant delay after the battery material mixture has been prepared. The system allows to closely control the provision of the at least one substance to the reactor in order to obtain a battery material mixture of a desired physical property (target property), in particular a desired rheological property (target rheological property). Low-quality products can thereby be avoided, leading to a more efficient manufacturing with improved yield. The yield may be calculated as the ratio of slurry output (from which waste has been subtracted) in relation the raw material input. In particular, the yield [%] may be calculated by dividing the mass [kg] of the battery material mixture which exits all of the at least one deposition devices in a predetermined amount of time, such as one minute, one hour or one day, by the mass [kg] of the contents input into the reactor for making the battery material, particularly the added mass of the active material, the binder and the solvent for the same amount of time.

In some embodiments, the battery manufacturing system further comprises a sampling unit configured to provide, in particular divert, a sample portion from the mixture in the one at least one intermediate conduit or intermediate container for the at least one measuring device. The sampling unit may for instance be provided to divert a portion of the battery material mixture from a production line extending from the reactor to the deposition device, in particular an intermediate conduit or intermediate container, to a bypass line. The sampling unit may include a probe head extending into the at least one intermediate conduit or intermediate container to receive the sample portion of the mixture. The sampling unit may be configured to provide the sample portion directly to the at least one measuring device. The sample portion may be a discrete amount of the battery material mixture. Alternatively, the sample portion may be a stream of the battery material mixture, in particular separate from the mixture conveyed in the intermediate conduits or intermediate containers towards a deposition device. The sample portion may be the portion of the battery material mixture subjected to testing by the at least one measuring device. It may be preferred that the sample portion is a fraction, in particular less than 10 % or less than 1 %, of the battery material mixture provided by the reactor for the battery manufacturing system. The sampling unit may be configured for receiving the sampling portion in the intermediate conduit or intermediate container. Alternatively or additionally, the sampling unit may be configured for receiving the sampling portion from the intermediate conduit or intermediate container. In particular, the sampling unit may be configured for guiding and/extracting the sample portion out of the intermediate conduit or intermediate container (i.e. out of a production line).

In some embodiments of the battery manufacturing system, the sampling unit comprises a valve configured to enable and disable a flow of the battery material mixture from the intermediate conduit or from the intermediate container to which the sampling unit is connected. In particular, the valve may be attached to this intermediate conduit or intermediate container. The valve may be configured to open an egress of the intermediate conduit or intermediate container such that the battery material mixture can exit from the intermediate conduit or intermediate container. Additionally or alternatively, the valve may be configured to close an egress of the intermediate conduit or intermediate container such that the battery material mixture is prevented from exiting the intermediate conduit or intermediate container. Such a valve may be referred to as an open/close-valve. Particularly, the valve may be configured to enable and disable a flow to the measuring device or to a reception configured to contain at least one sample portion, in particular a reception in a sample magazine.

According to some embodiments of the battery manufacturing system, the sampling unit is configured to provide one or more sample portions having a predetermined sample size. The predetermined sample size may be in the range of 0.1 mL to 1L or in the range 1 mL to 100 mL, in particular in the range 5 mL to 50 mL, more particularly in the range 20 mL to 30 mL. A larger sample sizes may lead to undesired amounts of waste material. A smaller sample size may lead to increased measurement errors or faulty measurements.

In some embodiments of the battery manufacturing system, alternatively or additionally, the sampling unit is configured to separate a sample portion of the mixture from the at least one intermediate conduit or intermediate container at a ratio in the range of 0.001 to 0.1, in particular 0.01 to 0.05, in relation to the mass flow of the battery material mixture in the intermediate conduit or intermediate container. By diverting a sample portion from the mass flow of the battery material mixture in the production line, precise measurements of the actual battery material mixture provided to the deposition device may be obtained. A ratio in the above-mentioned range has been proven to yield precise measurement results while not disturbing the main flow of the battery material mixture in the production line.

In some embodiments, which may be combined with the aforementioned ones, the sampling unit comprises a sample magazine which includes a multitude of receptions for storing different sample portions provided by the sampling unit. A reception may relate to a container for storing a predefined sample size. For example the reception may comprise a container having a volume in the range of 0.1 mL to 1 L or in the range 1 mL to 100 mL, in particular in the range 5 mL to 50 mL, more particularly in the range 20 mL to 30 mL, wherein said volume is configured to be filled with one respective sample portion. A reception may in particular relate to a container configured for isolating the sample portion therein from the atmosphere, in particular from the environment. In particular, a reception may be configured to contain one respective sample portion in a sealed manner. The sample magazine may include a plurality of receptions which may be selectively connectable to the valve such that distinct portions of the battery material mixture from the intermediate conduit or intermediate container can be collected individually, for example for the purpose of comparing their physical property and/or for archiving. Additionally or alternatively, the plurality of receptions may be selectively connectable with the rheological measuring device such that distinct portions of the battery material mixture from the intermediate conduit or intermediate container can be collected individually. The sample magazine may in particular be configured for storing a plurality of individual sample portions. The different sample portions may in particular be provided by the sampling unit to the receptions at different points in time, in particular in case the physical property of the sample portion is obtained intermittently, in particular frequently (e.g. once per day or once per hour).

According to some embodiments, the battery manufacturing system comprises a reactor which is configured for making the battery material mixture from contents including an active material, a binder and a solvent. Additionally, in such embodiments, the includes a reactor control unit configured to control providing the contents to the reactor, in particular according to a predetermined recipe. In such embodiments of the battery manufacturing system, the at least one measuring device, in particular rheological measuring device, is coupled to the reactor control unit and configured to provide the determined physical property, in particular rheological property, of the at least one substance to the reactor control unit. Several measuring devices may be coupled to the reactor control unit. Furthermore, in such embodiments, the reactor control unit is configured to modify a control of the reactor as a function of the measured physical property, in particular the rheological property. In particular, the reactor control unit may be configured to modify at least one of a mixing temperature, a mixing rate (rotor speed of a stirrer in RPM), and a mixing duration as a function of the measured physical property, in particular the rheological property. Alternatively or additionally, the reactor control unit may be configured to modify the composition for the battery material mixture based on the physical property, in particular rheological property, determined by the at least one measuring device, in particular rheological measuring device. The reactor control unit (RCU) may be configured for modifying a provision of at least one of the substances to the reactor as a function of the measured physical property. In particular, the reactor control unit may be configured for modifying a provision of at least one solvent to the reactor as a function of the measured physical property, in particular the rheological property. The reactor control unit may be configured for modifying a provision of at least one of the substances to the reactor as a function of the physical property measured by two or more measuring devices, in particular rheological measuring device. The reactor control unit may be configured to control one or more injection devices for introducing least one of the substances into the reactor. The reactor control unit may in particular be configured to control one or more injection devices for introducing a modified amount of at least one of the substances into the reactor. The reactor control unit may be implemented in a computer, a microchip, an electronic control unit, or the like.

In further embodiments of the battery manufacturing system which include the reactor control unite, the reactor control unit is configured to receive information regarding the physical property, in particular rheological property, from the at least one measuring device, in particular rheological measuring device, intermittently.Alternatively, the reactor control unit may be configured to continuously receive information regarding the physical property from the at least one measuring device. Alternatively or additionally, the reactor control unit may be configured to, in particular intermittently or continuously, control of the reactor as a function of the measured physical property, in particular the rheological property. The reactor may in particular be controlled to set a mixing temperature, a mixing rate (rotor speed of a stirrer in RPM), and a mixing duration as a function of the measured physical property. Additionally or alternatively, the reactor control unit may be configured to modify the composition as a function of the physical property, in particular rheological property. The reactor control unit may in particular be configured to receive information and/or to modify the reactor control, in particular the composition, frequently, that is, in regular intervals. The reactor control unit may in particular be configured to receive information and/or to modify the composition at a rate of at least once per week or at least once every two days, in particular at least once per day. The reactor control unit may in particular be configured to receive information and/or to modify the composition no more than once per second or no more than once per minute, in particular no more than once every 6 hours, more particularly no more than once every 12 hours. In particular reactor control unit is configured to operate with a rate of data acquisition (receiving information from at least one of the measurement devices) which is at least as fast as, in particular faster than, the rate at which control signals are emitted by the reactor control unit for controlling the amount, in particular the modified amount, for inserting the at least one substance. The function of the physical property may include an evaluation, in particular a comparison, of the respective physical property, in particular rheological property, associated with a plurality of sample portions taken from the battery material mixture, in particular sample portions contained within a plurality of receptions. The function of the physical property may in particular include an evaluation of the respective physical property, in particular rheological property, of a plurality of sample portions provided at different times, for example on different days, in particular from consecutive measurements. For instance, the reactor control unit may be configured to obtain information regarding a rheological property from the measuring device on a daily basis for the duration of the operation of production line for providing the battery material mixture in particular for coating an electrode.

In some embodiments of the battery manufacturing system, the at least one measuring device is connected to an intermediate conduit between the reactor and an intermediate container selected from a group comprising a storage tank configured to receive the mixture directly from the reactor, a supply tank configured to provide the mixture directly to a deposition device and, a transfer tank configured to receive the mixture from the storage tank and to provide the mixture to the supply tank. The storage tank may have a larger volume than the transfer tank. The transfer tank may have a larger volume than the supply tank. The storage tank may have a larger volume than the supply tank. The intermediate containers may have a respective volume much larger than a volume defined by the reception. The volume of an intermediate container, in particular of the smallest one of the storage container, the transfer container and the supply container, may be at least 10 times, in particular at least 100 times larger than the volume of the reception.

The at least one intermediate conduit to which the measuring device may be connected, may be selected from a group comprising a reactor conduit, a storage conduit, at least one transfer conduit and at least one supply conduit. The at least one intermediate conduit may in particular include a reactor conduit, a storage conduit, a transfer conduit and a supply conduit. In a system having two lines (for example a top line and a back line), the at least one intermediate conduit may in particular include a reactor conduit, a storage conduit including a distribution junction, two transfer conduits and two supply conduits. The reactor conduit may couple the storage tank to the reactor. The storage conduit may couple the at least one transfer tank to the storage tank. The at least one transfer conduit may couple a respective supply tank to a respective transfer tank. The at least one supply conduit may couple a respective deposition device to a respective supply tank.

The at least one intermediate container may include at least one of a storage tank, a transfer tank, and a supply tank. A stationary intermediate container may be rigidly attached to the reactor and/or to the deposition device. A storage container may be realized as a stationary container rigidly attached to the reactor. A supply container may be realized as a stationary container rigidly attached to the at least one deposition device. A moveable container may be configured to be moveable between the reactor and/or storage container on the one side and the at least one deposition device and/or supply tank on the other side. The moveable container may be configured to releasably connect to the reactor and/or the at least one deposition device. The transfer tank may be realized as a moveable container. The storage container and/or the supply container may be realized as a moveable container. The system may for example include three containers, namely at least one storage tank, at least one transfer tank at least one supply tank. In particular, the system may comprise exactly one storage tank, exactly two transfer tanks and exactly two supply tanks. Optionally, first and second deposition devices may both be associated with the same storage tank connected to the reactor. The first supply line may include at least one intermediate conduit and/or at least one intermediate container, in particular a first transfer tank and a first supply tank. The second supply line may include at least one intermediate conduit and/or at least one intermediate container, in particular a second transfer tank and a second supply tank.

In some embodiments of the battery manufacturing system, the at least one measuring device is configured to determine the physical property of the mixture from the at least one intermediate conduit or intermediate container, wherein a sample portion may be extracted or discharged from said intermediate conduit or container in order to be subjected to the measuring device. The measuring device may in particular be provided with a sampling unit connected downstream to the respective intermediate container. In particular, a sampling unit may be attached to an intermediate conduit downstream of the reactor or an intermediate container. A measuring device may for example be arranged adjacent or proximal to an intermediate container to measure the physical property of the mixture within this container. Multiple measuring devices may be provided, wherein each one of the multiple measuring devices may be associated with a respective intermediate container. The at least one measuring device associated with the reactor or an intermediate container may be arranged adjacent or proximal to said container, in particular the storage tank, the transfer tank, and/or the supply tank. It may be advantageous to employ only a small number of measuring devices in the system in order to be able create a simple and reliable control loop for controlling the amount of the substances in the mixture. For example, the system may include only one measuring device, for example connected to an intermediate conduit, in particular the reactor conduit.

The usage of several individual intermediate containers allows to maintain a buffer volume of the battery material mixture at the deposition device in a supply tank while new battery material mixture is being prepared in the reactor and initially received by the transfer tank. Additionally or alternatively, a new mixture can be made continuously in the reactor and be stored initially in the storage tank, while a previously blended mixture is transported via a transfer tank and/or one or more intermediate conduits to the deposition device or a supply tank in a deposition unit. The use of multiple intermediate containers downstream of the reactor and upstream of the deposition device additionally allows to identify, isolate and discharge a fraction of the battery material mixture which has physical properties, in particular rheological properties, which deviate from a permissible range, thereby minimizing waste.

In some embodiments of the battery manufacturing system, a plurality of measuring devices is associated with at least one respective intermediate conduit or intermediate container or with a plurality of intermediate conduits or intermediate containers. One of the intermediate containers or one of the intermediate conduits may be provided with two or more respective measuring devices. Multiple intermediate containers may be provided with only one respective measuring device each. Additionally or alternatively, multiple intermediate conduits may be provided with one respective measuring device each. Multiple intermediate containers may be provided with two or more respective measuring devices. Additionally or alternatively, multiple conduits and/or containers may be provided with two or more respective measuring devices. In some scenarios, it may be desired to monitor the physical property, in particular rheological property, of the mixture at several locations in the system in order to be able to control the amount and ratio of the substances in the mixture precisely.

In some further developments of the battery manufacturing system, the at least one supply tank and the at least one deposition device form a deposition unit, and the at least one measuring device, in particular rheological measuring device, is arranged upstream of the deposition unit. It is desirable to ascertain the exclusive provision of high-quality battery material mixture to the supply tank connected to the deposition device. Therefore, the system is designed to determine if the battery material mixture upstream of the deposition unit has a composition in accordance with the desired recipe, and to take adequate corrective measures to modify the composition of the actual battery material mixture before it is inserted into the deposition unit.

In some embodiments of the battery manufacturing system, the at least one measuring device is a rheological measuring device configured for measuring a rheological property of the battery material mixture. According to some exemplary embodiments, the rheological measuring device is selected from a group comprising a viscoelasticity sensor configured to determine a viscoelasticity of the mixture, and a viscosity sensor configured to determine a viscosity of the mixture. The viscosity sensor may in particular be configured to determine a dynamic viscosity of the mixture. The rheological measuring device may in particular be a rheometer from TA^{®} instruments, for example a TA Instruments Discovery HR-30 rotational rheometer. A rheological measuring device may include a first viscosity sensor and a viscoelasticity sensor. The rheological measuring device may include only one of a rheological measuring device for the viscosity or for the viscoelasticity.

According to another aspect, the present disclosure also relates to a battery manufacturing method. The battery manufacturing method comprises preparing a battery material mixture. Additionally the battery manufacturing method comprises making, in particular blending, a battery material mixture from substances including an active material, a binder and a solvent in a reactor. The mixing may be performed during the preparing. The method further comprises measuring a physical property, in particular a rheological property, of the battery material mixture in an intermediate conduit or intermediate container downstream of the reactor. Measuring the physical property of the battery material mixture may be performed inside of an intermediate conduit or intermediate container. Alternatively, it may be preferred to perform the measuring of the physical property of the battery material mixture in the intermediate conduit or intermediate container on a portion of the battery material mixture extracted or discharged from said intermediate conduit or intermediate container. Measuring "downstream" of the reactor relates to a measurement outside of the space of the reactor where mixing of the substances to obtain the mixture is performed. It shall be understood that the terms downstream or upstream may refer to a continuous or discontinuous production line. In a discontinuous production line, fractions of the battery material mixture may, at least sectionally, be conveyed in distinct fractions, for instance through a sluice or through a transfer container, which may be separated at least temporarily from upstream and/or downstream parts of the system. Measuring the physical property, in particular the rheological property, may in particular be conducted during preparing.

In some embodimente, the battery manufacturing method further comprises providing at least one sample portion from the mixture in the one at least one intermediate conduit or intermediate container for measuring by at least one measuring device. In some embodiments, the sample portion may be a stream of the battery material mixture, in particular separate from the mixture conveyed in the intermediate conduits or intermediate containers towards a deposition device. The sample portion may be the portion of the battery material mixture subjected to testing by the at least one measuring device. In particular, providing at least one sample portion (short: sampling) may include conveying the sample portion through an egress of the intermediate container or intermediate conduit. The providing at least one sample portion may include receiving the sample portion through a probe head which extends into the at least one intermediate conduit or intermediate container. The sampling unit may be configured for receiving the sampling portion within the intermediate conduit or intermediate container. Alternatively or additionally, the sampling unit may be configured for receiving the sampling portion from the intermediate conduit or intermediate container. In particular, the sampling unit may be configured for guiding and/extracting the sample portion out of the intermediate conduit or intermediate container (i.e. out of a production line).

In an exemplaryembodiment of the battery manufacturing method, the providing at least one sample portion includes separating the sample portion from the mixture in the one at least one intermediate conduit or intermediate container. In particular, the sample portion may be separated from the mixture which is being conveyed in an intermediate conduit between the reactor and an intermediate container selected from a group comprising a storage tank configured to receive the mixture directly from the reactor, a supply tank configured to provide the mixture directly to a deposition device and, a transfer tank configured to receive the mixture from the storage tank and to provide the mixture to the supply tank. The discharged or extracted sample portion may be a discrete amount of the battery material mixture. It may be preferred that the sample portion is a fraction, in particular less than 10 % or less than 1 %, of the battery material mixture provided by the reactor for the battery manufacturing system.

In some embodiments of the method, separating the sample portion includes operating a valve to enable and disable a flow of the battery material mixture from the intermediate conduit or intermediate container to which the sampling unit is attached or generally connected, in particular a flow to the measuring device or sample magazine. The valve may be controlled to open in order to allow a sample portion to move out of the intermediate conduit and/or intermediate container to a reception or measuring device. The valve may be controlled to close in order to prevent battery material mixture from leaving the production line, in particular the intermediate conduit and/or intermediate container.

In an embodiment of the battery manufacturing method, which may be combined with the aforementioned ones, the separating the sample portion includes drawing a sample portion of a predetermined sample size from the flow of the mixture in the one at least one intermediate conduit or intermediate container. Separating the sample portion may include introducing the sample portion into a distinct reception of a sample magazine. It may be preferred if a sample portion of a predetermined sample size in the range of 0.1 mL to 1 L or in the range 1 mL to 100 mL, in particular in the range 5 mL to 50 mL, more particularly in the range 20 mL to 30 mL, is drawn. Collecting a battery material mixture of a predetermined sample size may be done with the aid of a reception dimensioned to receive a sample of the predetermined sample size. Alternatively or additionally, collecting a battery material mixture of a predetermined sample size may be done by operating a valve, first to open and then to close, such that a sample portion of a predetermined size is discharged from the production line. A sample portion having a predetermined sample size may be collected by extracting an amount of the battery material mixture according to the predetermined sample size from the production line

Alternatively or additionally, in an embodiment of the battery manufacturing method, the separating the sample portion includes diverting a sample portion of the mixture from the at least one intermediate conduit or intermediate container at a ratio in the range of 0.001 to 0.1, or 0.01 to 0.05, in relation to the mass flow of the battery material mixture in the intermediate conduit or intermediate container. The sampling may for instance be provided to divert a portion of the battery material mixture from a production line extending from the reactor to the deposition device, in particular an intermediate conduit or intermediate container, to a bypass line.

According to some embodiments, the battery manufacturing method further comprises modifying the step of making the mixture as a function of the measured physical property, in particular the rheological property. In particular, the reactor control unit may be configured to modify at least one of a mixing temperature, a mixing rate (rotor speed of a stirrer in RPM), and a mixing duration as a function of the measured physical property, in particular the rheological property. Alternatively or additionally, the modifying may relate to a provision of at least one of the substances, in particular a liquid substance, for the preparing as a function of the measured physical property, in particular rheological property. It may be preferred if the manufacturing method includes modifying the composition of the battery material mixture, in particular in the reactor. The composition of the mixture may for example be modified by modifying the amount of one of the substances while maintaining the amount of at least one other substance constant. The composition of the mixture may for example be modified by adding at least one additional portion of one of the substances the reactor to the substances of the mixtures present in the reactor.

The function of the physical property may in particular include an evaluation of the respective physical properties, in particular rheological properties, of a plurality of sample portions provided at different times, for example on different days, in particular from consecutive measurements. For instance, the modifying may be performed on a daily basis for the duration of the operation of production line for providing the battery material mixture in particular for coating an electrode. For example, measuring a physical property can be conducted once per day. Additionally, modifying can be performed once per day as a function of several physical property values measured on the present day and one, two, or more past days.

In some further embodiments of the battery manufacturing method, the measuring is conducted intermittently. In particular, the measuring may be conducted frequently at predetermined intervals, particularly intervals of constant length. In some exemplary embodiements, additionally or alternatively, the provision of at least one of the substances for the preparing is determined as a function of the measuring. The measuring, in particular the provision of data associated with measurements of at least one measuring device, in particular a rheological measuring device, to a control unit and/or receiving of data associated with measurements of at least one measuring device, in particular the rheological measuring device, by a control unit, in particular a reactor control unit, may be performed at a rate of at least once per week or at least once every two days, in particular at least once per day. The provision of data associated with measurements of at least one measuring device to a control unit and/or receiving of data associated with measurements of at least one measuring device may be performed at a rate of no more than once per second or no more than once per minute, in particular no more than once every 6 hours, more particularly no more than once every 12 hours. In particular the rate of data acquisition (obtaining information from at least one of the rheological measuring devices) is at least as fast as, in particular faster than, the rate at which control signals are emitted by the reactor control unit for controlling the amount, in particular the modified amount, for inserting the at least one substance.

In some embodiments of the method, the function of the measured physical property includes a comparison (or generally an evaluation), of the respective physical properties, in particular rheological properties, associated with a plurality of sample portions taken from the battery material mixture, in particular sample portions contained within a plurality of receptions. It may be preferred that the function of the measuring includes a comparison of physical properties associated with a plurality of different sample portions. In particular, a plurality of individual sample portions which may be stored in distinct receptions of a sample magazine, may be used in the function of the measuring.

In some embodiments of the battery manufacturing method, the sampling is performed from at least one intermediate conduit or intermediate container upstream of a deposition device, in particular upstream of a deposition unit, where the battery material mixture is applied onto an electrode substrate. It is desirable to ascertain the exclusive provision of high-quality battery material mixture to the supply tank connected to the deposition device. Therefore, the system is designed to determine if the battery material mixture upstream of the deposition unit has a composition in accordance with the desired recipe, and to take adequate corrective measures to modify the composition of the actual battery material mixture before it is inserted into the deposition unit.

The battery manufacturing method may additionally include determining a material property, in particular a viscosity, of the battery mixture, in particular in the deposition device or in a deposition unit which includes the deposition device as well as a supply tank connected to the deposition device. Determining the at least one material property may in particular be performed after the preparation of the battery material mixture has been completed. The battery mixture may then either be applied onto the electrode substrate or discharged, as a function of the material property. Determining the at least one material property may in particular include comparing a detected material property with a reference value and/or reference range. The discharging or applying the mixture function of the material may include evaluating whether the detected material property is within an allowable reference range or allowable with respect to a reference value, wherein the reference value may for instance be defined as a lower threshold or as an upper threshold. Even though measuring of the physical property of the mixture during preparing allows to take countermeasures in case issues arise, determining a material property after the preparing may provide an additional safeguard against the use of a battery material mixture before it is coated onto an electrode substrate.

In the battery manufacturing method, the measuring may be performed with respect to the battery mixture in at least one respective intermediate conduit or intermediate container or within a plurality of intermediate conduits or intermediate containers. The measuring can include sampling steps at a plurality of different locations in a system for manufacturing a battery, in particular in at least one or several different intermediate containers and/or in at least one or several different intermediate conduits. For example, the method may include sampling at a first location in a first intermediate conduit or container and at a second location in a second intermediate conduit or container, which may in particular be connected downstream to the first intermediate conduit or container. It may be preferred if the measuring the physical property, in particular rheological property, is conducted on sample portions drawn at several locations. Measuring the physical property, in particular rheological property, may in particular include using a corresponding number of different measuring devices, in particular rheological measuring devices and/or sampling units, connected, in particular stationarily attached, at those locations.

In some embodiments of the battery manufacturing method, the measuring includes measuring at least one rheological property of the mixture, in particular at least one of measuring a viscoelasticity of the mixture and measuring a viscosity, in particular a dynamic viscosity, of the mixture. The measuring may include at least one first measuring step for measuring the viscosity of the mixture in the mixture and a second measuring step for measuring the viscoelasticity of the mixture in the mixture. The method may include only one of a step of measuring the viscosity of the mixture in the mixture or the viscoelasticity of the mixture. In particular, in a particularly simple embodiment, the measuring of a physical property, in particular rheological property, of the battery material mixture may include measuring only the viscosity, in particular only the dynamic viscosity, of the mixture. A process to determine a shear-rheological property of the mixture, in particular a dynamic viscosity, may include the following steps:
(a) setting up the rheological measuring device;
(b) running the associated software on a computer connected to the rheological measuring device;
(c) calibrating the equipment of the rheological measuring device;
(d) loading the battery material mixture (slurry) into the rheological measuring device;
(e) setting up a predetermined test routine; and
(f) starting the test predetermined routine.

Wherein the steps (a), (b), (c), (d), (e), and (f) are preferably performed successively in ascending order. In particular, step (e) may include at least one or more of the sub-steps:
(e1) setting up test parameters;
(e2) defining a test path; and
(e3) setting conditions according to the test parameters (temperature, time, etc.). The sub-steps (e1), (e2), and (e3) are preferably performed successively in ascending order.

The battery manufacturing system as disclosed herein may be suited to perform the battery manufacturing method as disclosed herein. Any, some or all of the features of the battery manufacturing system as disclosed herein may also be implemented in the battery manufacturing method as disclosed herein, unless indicated otherwise or technically inappropriate. Accordingly, the technical effects and advantages described herein with respect to the battery manufacturing system may also apply to the battery manufacturing method disclosed herein.

The battery manufacturing method as disclosed herein may be suited to be carried out by the battery manufacturing system as disclosed herein. Any, some or all of the features of the battery manufacturing method as disclosed herein may also be implemented in the battery manufacturing system as disclosed herein, unless indicated otherwise or technically inappropriate. Accordingly, the technical effects and advantages described herein with respect to the battery manufacturing method may also apply to the battery manufacturing system disclosed herein.

Particularly, the invention may be embodied by an automated plant, for example by a smart factory, that comprises the battery manufacturing system as disclosed herein.

The battery manufacturing method as disclosed herein may be a computer implemented method. As such, the battery manufacturing method may be provided as instructions to be carried out by a process in a machine-readable storage medium. In particular, a computer-readable storage medium may contain instructions which, when carried out by a computer, cause it to perform the battery manufacturing method.

### BATTERY MATERIAL MIXTURE

The battery material mixture to be dispensed by the die coater as an example of a deposition device may be used to form an active electrode material layer. The battery material mixture may include a liquid material and a solid material, and/or a material that is partly in a liquid state and partly in a solid state. The battery material mixture may be defined by the composition of the substances (materials) contained in the mixture. In specific examples, the battery material mixture may include a binder and a solid active material, which may be provided, for example, as a granular and/or powder material. In alternative examples, the battery material mixture may be or include an electrically isolating material. The active material may include conductive additives, binder, filler and other components (active material mixture). The battery material mixture may contain one or more liquid substances.

Generally, the battery material mixture may include an active material that is used for forming an electrode of a battery, particularly a secondary battery. The material may include an active material that is used for forming a positive electrode or a negative electrode. The battery material mixture, particularly the solid active material, may contain, as a non-exhaustive list of examples, lithium-cobalt oxide (LCO), lithium nickel cobalt manganese oxide (NCM), lithium nickel cobalt aluminum oxide (NCA), lithium manganese oxide (LMO), lithium nickel manganese spinel (LNMO), lithium iron phosphate (LFP). The battery material mixture, particularly the solid active material, may also include graphite, pure lithium and/or silicon.

The solvent may be or include water, in particular deionized water. Alternatively or additionally, the liquid component may be or include an organic solvent, such as tetrahydrofuran (THF) or N-methyl-2-pyrrolidon (NMP).

Examples of the solvent include organic solvents such as N-methylpyrrolidone (NMP), pyrrolidone, methyl ethyl ketone, methyl isobutyl ketone, hexahexanone, toluene, dimethylformamide, dimethylacetamide, etc., or combinations of two or more of these. Alternatively, the solvent may be water or a mixed solvent mainly composed of water.

In case the mixture for forming the active material layer is an aqueous composition (a composition using water or a mixed solvent mainly composed of water as a dispersion medium for the binder), a polymer that disperses or dissolves in water can be preferably used as the binder. Examples of polymers that are dispersible or soluble in water include styrene butadiene rubber (SBR), carboxymethyl cellulose (CMC), polytetrafluoroethylene (PTFE), polyethylene (PE), polyacrylic acid (PAA), and the like.

A mixture may comprise more than one solvent. A mixture may comprising water as a first solvent and another solvent, for example one or more organic solvents (lower alcohols, lower ketones, etc.). It may be preferred to use one or more organic solvents that can be uniformly mixed with water.

The binder may be a polymeric binder. The binder may be or include polyvinylidene fluoride (PVDF), polymethyl acrylate (PMMA), carboxymethylcellulose (CMC), polyacrylate, xanthan gum, polyethylene glycol, or styrene butadiene.

The battery material mixture may additionally contain solid conductive particles, for example carbon black and/or carbon nanotubes. The battery material mixture may additionally contain dispersants.

The battery material mixture may be a flowable and/or viscous mass. The battery material mixture may be also referred to as a slurry. The battery material mixture may have a viscosity (dynamic viscosity) of 10² mPa·s or more at an atmospheric pressure (1013.25 hPa) and 25°C. More particularly, the battery material mixture may have a viscosity of 10³ mPa·s or more, 10⁴ mPa·s or more, 10⁶ mPa·s or more, 10¹⁰ mPa·s or more, or 10¹² mPa·s or more at the atmospheric pressure and 25°C. An upper boundary for the viscosity may be given by the transition into the solid state, and may be at or above 10²⁴ mPa·s at the atmospheric pressure and 25°C. Unless indicated otherwise, the viscosity may be determined using a viscosimeter according to the standard EN ISO 3219. Alternatively or additionally, the viscosity may be measured, for example, using a Stabinger viscometer SVM kinematic viscometer in accordance with ASTM 7042, at the atmospheric pressure and 25°C. The rheological measuring device may in particular be a rheometer from TA^{®} instruments, for example a TA Instruments Discovery HR-30 rotational rheometer. For the sake of brevity, the terms battery material mixture and slurry may be used interchangeably hereinafter, unless indicated otherwise or technically inappropriate.

For example, an electrode configured to act as an anode may be provided with an active material layer configured for receiving and/or storing, preferably releasably storing, ions. An active material, in particular of an anode, may include graphite as its first component. An electrode configured to act as a cathode may be equipped with an active material configured to release ions. The active material, in particular for a cathode, may comprise or consist of metal oxide, such as a lithium oxide. The active material may for example include or consist of LCO (LiCoO₂), NCM (Li(NiCoMn)O₂), NCA (Li(NiCoAl)O₂), LMO (LiMn₂O) and/or LFP (LiFePO₄).

An active cathode material may be configured to be replenishable. The process of releasing ions from the cathode active material and received of ions by the anode active material may be referred to as discharging. A process of releasing ions from an anode active material and replenishing the cathode active material with the ion may commonly be referred to as charging or recharging. The active materials used in the electrodes of a battery are considered essential for determining properties of a battery such as its capacity, voltage and memory effect.

A positive electrode active material is coated on a positive electrode unit and a negative electrode active material coated on a negative electrode unit may include any known active material in the technical field pertaining to the present disclosure without limitation.

In an example, the positive electrode active material may include an alkali metal compound represented by formula A[AₓM_{y}]O_{2+z} (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; the stoichiometric coefficients x, y and z are selected to keep the compound electrically neutral).

In another example, the positive electrode active material may be an alkali metal compound xLiM¹O₂₋₍₁₋ₓ₎Li₂M²O₃ (M¹ includes at least one element having an average trivalent oxidation state; M² includes at least one element having an average tetravalent oxidation state; 0 ≤ x ≤ 1).

In still another example, the positive electrode active material may be lithium metal phosphate represented by formula LiₐM¹ₓFe₁₋ₓM²_{y}P_{1-y}M³_{z}O_{4-z} (M¹ includes at least one selected from Ti, Si, Mn, Co, Fe, V, Cr, Mo, Ni, Nd, Al, Mg and Al; M² includes at least one selected from Ti, Si, Mn, Co, Fe, V, Cr, Mo, Ni, Nd, Al, Mg, Al, As, Sb, Si, Ge, V and S; M³ includes a halogen group element optionally including F; 0 < a ≤ 2, 0 ≤ x ≤ 1, 0 ≤ y < 1, 0 ≤ z < 1; the stoichiometric coefficients a, x, y and z are selected to keep the compound electrically neutral), or Li₃M₂(PO₄₎3 [M includes at least one selected from Ti, Si, Mn, Fe, Co, V, Cr, Mo, Ni, Al, Mg and Al].

Preferably, the positive electrode active material may include primary particles and/or secondary particles formed by agglomeration of the primary particles.

The battery material mixture may be defined by a composition consisting of predefined contents of the substances included in the mixture. The composition may be associated with a predetermined recipe (target composition). The composition may in particular be equal to a predefined recipe. Additionally or alternatively, the composition may be associated with a desired physical property (target property), in a desired particular rheological property (target rheological property). The target composition may be associated with a target density and/or target viscosity.

The composition of the battery material may be defined by a first content of the active material, a second content of the solvent and a third content of the binder, wherein the composition may optionally contain one or more additional substances of a respective content.

According to a predetermined recipe, the first content of active material, in particular electrode active material powder, in the composition of the battery material mixture may be 25 wt % to 65wt %, in particular 35wt % to 65wt %, more particularly 40 wt % to 50 wt % or 42 wt % to 49 wt % with respect to the total weight of the battery material mixture.

The second content of solvent in the composition of the battery material mixture may be 30 wt % to 70 wt %, in particular 25 wt % to 60 wt %, more particularly 30 wt % to 50 wt % or 40 wt % to 45 wt % with respect to the total weight of the battery material mixture. If the solvent content becomes too high, the density of the resulting battery material mixture (slurry) may decrease so much that it is no longer useable for coating an electrode substrate. A battery material mixture having a solvent content of more than 70 wt% may dissolve and not stick reliably to an area of the electrode substrate designated to be coated. Conversely, if there is too little solvent in the battery material mixture, the battery material mixture may be brittle or not adhere to the electrode substrate at all.

The third content of binder in the composition of the battery material mixture may be 0.01 wt % to 20 wt %, in particular 0.05 wt % to 20 wt %, more particularly 0.1 wt % to 20 wt % or 0.5 wt % to 10 wt % with respect to the total weight of the battery material mixture.

A conductive material may be included in a fourth content of 10 wt % or less, and preferably, 5 wt % or less. The fourth content may be 0.01 wt % to 15 wt %, in particular 0.05 wt % to 10 wt %, more particularly 0.1 wt % to 5 wt % or 0.5 wt % to 3 wt % with respect to the total weight of the battery material mixture.

### ACTIVE MATERIAL POWDER

An active material powder may include active material powder comprising a metal oxide, for example including a lithium composite transition metal oxide, in the form of a single particle consisting of one nodule and/or a pseudo-single particle which is a composite of 30 or less nodules, preferably 2 to 20 nodules, and more preferably 2 to 10 nodules. Since the active material powder comprising a metal oxide, for example including a lithium composite transition metal oxide, in the form of a single particle and/or a pseudo-single particle has higher particle strength than a conventional lithium composite transition metal oxide in the form of a secondary particle in which several tens to several hundreds of primary particles are agglomerated, particles are less broken in rolling.

In addition, since the active material powder comprising a metal oxide, for example including a lithium composite transition metal oxide, in the form of a single particle or a pseudo-single particle has a small number of sub-parts (i.e. nodules) constituting the single particles and/or pseudo-single particles, changes resulting from the volume expansion/contraction of the sub-parts (i.e. nodules) during charging and discharging are small, and accordingly, the generation of cracks inside the particles is substantially reduced.

In the present disclosure, "single particle" is a particle consisting of a single nodule. In the present disclosure, a "pseudo-single particle" refers to a particle which is a composite formed of 30 or less nodules. A "nodule" according to the present disclosure refers to particle unit body constituting a single particle and a pseudo-single particle. The nodule may be a single crystal lacking any crystalline grain boundary, or alternatively that may be a polycrystal in which grain boundaries do not appear when observed in a field of view of 5000× to 20000× using a scanning electron microscope (SEM).

In the present disclosure, a "secondary particle" refers to a particle formed by agglomeration of a plurality several tens to several hundreds of primary particles. More specifically, a secondary particle is an agglomerate of 50 primary particles or more. In the present disclosure, when a "particle" is described, any one or all of a single particle, a pseudo-single crystal, a primary particle, a nodule, and a secondary particle may be encompassed.

In the present disclosure, "Dmean" refers to the average particle diameter of the nodules as measured using an electron backscatter diffraction (EBSD) pattern analyzer. EBSD analysis is conducted by manufacturing an electrode using a positive electrode active material powder to be measured, cutting the electrode through ion milling (HITACHI IM-500. accelerating voltage: 6 kV) before a rolling process to obtain a cross section, and measuring the cross section using a FE-SEM device (JEOL JSM-7900F). In this case, the measurement is made under the condition of an accelerating voltage of 15 kV and a W.D. of 15 mm on a scale (130) of about 400±10 primary particles. The active material powder may include nodules having a mean particle diameter (Dmean) of 0.5 to 3.5 µm. Specifically, the Dmean may be 0.5 µm or more, 1.0 µm or more, or 1.5 µm or more, and the Dmean may be 3.5 µm or less, 3 µm or less, 2.5 µm or less, or 2.0 µm or less. When the average particle diameter (Dmean) of the nodules is less than 0.5 µm, the specific surface area of the entire positive electrode active material is increased, and thus a side reaction with an electrolyte may be increased. On the other hand, when the Dmean exceeds 3.5 µm, (lithium) mobility in the positive electrode active material is decreased, and thus the output characteristics of a battery may be degraded.

In the present disclosure, "D50" refers to a particle size corresponding to a cumulative volume of 50% in the particle size distribution of an active material powder. The average particle diameter (D50) may be measured by a laser diffraction method. For example, the average particle diameter may be measured by dispersing a positive electrode active material powder in a dispersion medium, inputting the resultant into a commercially available laser.

The active material powder may have a D50. which is a value corresponding to a cumulative volume of 50% in the particle size distribution of the powder, of 2 to 10 µm. Specifically, the D50 may be 2 µm or more, 3 µm or more, 4 µm or more, 5 µm or more, or 6 µm or more and the D50 may be 10 µm or less, 9 µm or less, 8 µm or less, or 7 µm or less. When the D50 is less than 2 µm, the specific surface area of the entire positive electrode active material is increased, and thus a side reaction with an electrolyte may be increased. On the other hand, when the D50 exceeds 10 µm, lithium mobility in the positive electrode active material is decreased, and thus the output characteristics of a battery may be degraded.

### BATTERY

Herein, the term battery may generally include or be any electrochemical cell for energy storage. In particular, the battery as used herein may include a principal battery and/or a secondary battery, unless indicated otherwise or technically inappropriate. For example, the battery as used herein refers to a secondary battery, i.e., a rechargeable battery. For example, the battery may comprise one or more layers of electrodes and one or more layers of separators stacked in a specific manner. The battery may be a coin-type, cylindrical, prismatic, or pouch-type battery. Particularly, the battery may be configured to provide power to an electric vehicle. Hereinafter, a reference will be made to "a" battery, i.e., in an indefinite manner, in order not to limit the subject matter to the manufacture of a single particular battery.

Batteries generally include two electrodes of opposite polarity, namely an anode and a cathode. The electrodes are arranged within a mutual container alongside a separator. The separator divides the container such that the anode and the cathode do not come into immediate contact with one another so as to avoid a short circuit. Furthermore, the mutual container is filled with an electrolyte solution, which allows ions to pass from the cathode to the anode, to allow for a chemical reaction to release electrical energy. The electrodes of the battery may each comprise a respective foil. The foil may realize the electrode substrate. The foil may comprise or consist of an electrically conductive material. In particular, the foil may consist of or comprise a metal, or a metal alloy, comprising or consisting for example of aluminum or copper. It may be preferred that at least one electrode of the battery is realized as a foil coated with an active electrode material layer.

### POSITIVE ELECTRODE

A positive electrode preferably includes an active material powder, particularly a positive electrode active material powder. Specifically, the positive electrode includes a positive electrode current collector and a positive electrode active material layer formed on the positive electrode current collector, and the positive electrode active material layer includes the positive electrode active material powder.

In an example, the positive electrode active material may include an alkali metal compound represented by formula A[AₓM_{y}]O_{2+z} (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0.1 ≤ x+y ≤2, -0.1 ≤ z ≤ 2; the stoichiometric coefficients x, y and z are selected to keep the compound electrically neutral).

In another example, the positive electrode active material may be an alkali metal compound xLiM¹O₂-(1-x)Li₂M²O₃ (M1 includes at least one element having an average trivalent oxidation state; M² preferably includes at least one element having an average tetravalent oxidation state; 0 ≤ x ≤ 1).

In still another example, the positive electrode active material may be lithium metal phosphate represented by formula LiₐM¹ₓFe₁₋ₓM²_{y}P_{1-y}M³_{z}O_{4-z} (M¹ includes at least one selected from Ti, Si, Mn, Co, Fe, V, Cr, Mo, Ni, Nd, Al, Mg and Al; M² includes at least one selected from Ti, Si, Mn, Co, Fe, V, Cr, Mo, Ni, Nd, Al, Mg, Al, As, Sb, Si, Ge, V and S; M³ includes a halogen group element optionally including F; 0 < a ≤ 2, 0 ≤ x ≤ 1, 0 ≤ y < 1, 0 ≤ z < 1; the stoichiometric coefficients a, x, y and z are selected to keep the compound electrically neutral), or Li₃M₂(PO₄)₃ [M includes at least one selected from Ti, Si, Mn, Fe, Co, V, Cr, Mo, Ni, Al, Mg and Al].

Preferably, the positive electrode active material may include primary particles and/or secondary particles formed by agglomeration of the primary particles.

In an example, the positive electrode active material may include a carbon material, lithium metal or a lithium metal compound, silicon or a silicon compound, tin or a tin compound. Metal oxide having the potential of less than 2V such as TiO₂ and SnO₂ may be used as the positive electrode active material. The carbon material may include low crystalline carbon and high crystalline carbon.

The positive electrode current collector (which may preferably be realized by the electrode substrate) may include a highly conductive metal and is not particularly limited as long as the positive electrode active material layer is easily adhered thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. Also, the positive electrode current collector may typically have a thickness of 3 µm to 500 µm and have fine irregularities formed on the surface thereof to increase the adhesion of the positive electrode active material. For example, the positive electrode current collector may be used in any of various forms such as a film, a sheet, a foil, a net, a porous material, a foam, a non-woven fabric, and the like.

In this case, the positive electrode active material powder may be included in a content of 80 to 99 wt %, more specifically, 85 to 98.5 wt % with respect to the total weight of the positive electrode active material layer. When the positive electrode active material powder is included in the above-described content, excellent capacity characteristics can be exhibited.

The conductive material is used to impart conductivity to the electrode, and any conductive material that does not cause a chemical change in a battery and has conductivity may be used without particular limitation. Specific examples thereof include graphite such as natural graphite and artificial graphite; carbon-based materials such as carbon black, acetylene black, Ketjen black, channel black, furnace black, lamp black, thermal black, carbon fiber, and the like; powders or fibers of metals such as copper, nickel, aluminum, silver, and the like; conductive tubes such as carbon nanotubes and the like; conductive whiskers such as zinc oxide, potassium titanate, and the like; conductive metal oxides such as titanium oxide and the like; and conductive polymers such as polyphenylene derivatives and the like, which may be used alone or in combination of two or more thereof. The conductive material may be included in a content of 0.1 to 15 wt % with respect to the total weight of the positive electrode active material layer.

The binder serves to enhance the cohesion between positive electrode active material particles and the adhesion between the positive electrode active material and the current collector. Specific examples thereof include polyvinylidene fluoride (PVDF), a polyvinylidene fluoride-hexafluoropropylene copolymer (PVDF-co-HFP), polyvinyl alcohol, polyacrylonitrile, polymethyl methacrylate, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene butadiene rubber (SBR), fluoro-rubber, polyacrylic acid, polymers in which hydrogens thereof have been substituted with Li, Na, or Ca, and various copolymers thereof, which may be used alone or in combination of two or more thereof. The binder may be included in a content of 0.1 to 15 wt % with respect to the total weight of the positive electrode active material layer.

The positive electrode may be manufactured by a typical method of manufacturing a positive electrode, wherein the positive electrode active material powder is used. Specifically, the positive electrode may be manufactured by applying, onto a positive electrode current collector, a positive electrode slurry composition prepared by dissolving or dispersing the positive electrode active material powder and, optionally, a binder, a conductive material, and a dispersant in a solvent and drying and roll-pressing the same.

The solvent may be a solvent generally used in the art, and examples thereof include dimethyl sulfoxide (DMSO), isopropyl alcohol, N-methyl pyrrolidone (NMP), dimethyl formamide (DMF), acetone, water, and the like, which may be used alone or in combination of two or more thereof. The usage amount of the solvent is sufficient as long as it is able to dissolve and disperse the positive electrode active material, conductive material, binder, and dispersant considering the thickness of an applied slurry and manufacturing yield and allows a viscosity capable of exhibiting excellent thickness uniformity when applied to manufacture a positive electrode.

### NEGATIVE ELECTRODE

A negative electrode preferably includes an active material powder, particularly a negative electrode active material powder. Specifically, the negative electrode includes a negative electrode current collector and a negative electrode active material layer formed on the negative electrode current collector, and the negative electrode active material layer includes the negative electrode active material powder.

In a battery, in particular a lithium secondary battery, the negative electrode includes a negative electrode current collector and a negative electrode active material layer positioned on the negative electrode current collector.

The negative electrode current collector (which may preferably be realized by the electrode substrate) is not particularly limited as long as it does not cause a chemical change in a battery and has high conductivity. For example, copper, stainless steel, aluminum, nickel, titanium, thermally treated carbon, copper or stainless steel whose surface has been treated with carbon, nickel, titanium, silver, or the like, an aluminum-cadmium alloy, or the like may be used. Also, the negative electrode current collector may typically have a thickness of 3 µm to 500 µm. Also, like the positive electrode current collector, the negative electrode current collector may have fine irregularities formed on the surface thereof to increase the adhesion of a negative electrode active material. For example, the negative electrode current collector may be used in any of various forms such as a film, a sheet, a foil, a net, a porous material, a foam, a non-woven fabric, and the like.

The negative electrode active material layer includes a negative electrode active material and, optionally, a binder and a conductive material.

As the negative electrode active material, a compound that enables the reversible intercalation and deintercalation of lithium may be used. Specific examples thereof include: carbonaceous materials such as artificial graphite, natural graphite, graphitized carbon fiber, amorphous carbon, and the like; metallic compounds capable of alloying with lithium, such as Si, Al, Sn, Pb, Zn, Bi, In, Mg, Ga, Cd, a Si alloy, a Sn alloy, an Al alloy, and the like; metal oxides capable of doping and dedoping lithium, such as SiO_{β} (0<β<2), SnO₂, vanadium oxide, and lithium vanadium oxide; and composites including the metallic compound and the carbonaceous material, such as a Si-C composite and a Sn-C composite, which may be used alone or in combination of two or more thereof. In addition, a lithium metal thin film may be used as the negative electrode active material. Additionally, as a carbon material, both low-crystallinity carbon and high-crystallinity carbon may be used. Representative examples of the low-crystallinity carbon include soft carbon and hard carbon, and representative examples of the high-crystallinity carbon include amorphous, platy, flaky, spherical or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch-derived cokes, and the like.

The negative electrode active material may be included in a content of 80 wt % to 99 wt % with respect to the total weight of the cured negative electrode active material layer.

The binder serves to assist bonding between the conductive material, the active material, and the current collector and is typically included in a content of 0.1 wt % to 10 wt % with respect to the total weight of the negative electrode active material layer after curing. Examples of the binder include polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated EPDM, styrene butadiene rubber, nitrile butadiene rubber, fluorine rubber, and various copolymers thereof.

The conductive material is a component for enhancing the conductivity of the negative electrode active material and may be included in a content of 10 wt % or less, and preferably, 5 wt % or less with respect to the total weight of the negative electrode active material layer after curing. Such a conductive material is not particularly limited as long as it does not cause a chemical change in a battery and has conductivity. For example, graphite such as natural graphite, artificial graphite, or the like; carbon black such as acetylene black, Ketjen black, channel black, furnace black, lamp black, thermal black, or the like; a conductive fiber such as a carbon fiber, a metal fiber, or the like; carbon fluoride; a metal powder containing aluminum, nickel, or the like; a conductive whisker such as zinc oxide, potassium titanate, or the like; a conductive metal oxide such as titanium oxide or the like; or a conductive material such as a polyphenylene derivative or the like may be used.

The negative electrode may be manufactured by a typical method of manufacturing a negative electrode, wherein the negative electrode active material powder is used. Specifically, the negative electrode may be manufactured by applying, onto a negative electrode current collector, a negative electrode slurry composition prepared by dissolving or dispersing the negative electrode active material powder and, optionally, a binder, a conductive material, and a dispersant in a solvent and drying and roll-pressing the same.

The negative electrode active material layer may be formed by applying, onto a negative electrode current collector, a negative electrode slurry composition prepared by dissolving or dispersing a negative electrode active material and, optionally, a binder and a conductive material in a solvent and drying the same, or by laminating, on a negative electrode current collector, a film obtained by casting the negative electrode slurry composition on a separate support and removing it from the support.

In an example, the negative electrode active material may include a carbon material, lithium metal or a lithium metal compound, silicon or a silicon compound, tin or a tin compound. Metal oxide having the potential of less than 2V such as TiO₂ and SnO₂ may be used as the negative electrode active material. The carbon material may include low crystalline carbon and high crystalline carbon.

### BRIEF DESCRIPTION OF THE DRAWINGS

The drawings and the description of the drawings are provided to support the understanding of the invention. The drawings merely depict concretized examples for the illustration purposes and do not limit the scope of the invention thereto.
FIG. 1 is a schematic illustration of a battery manufacturing system according to an example.
FIG. 2 is a schematic diagram of a battery manufacturing method according to an example.

### DETAILED DESCRIPTION OF THE DRAWINGS

Hereinafter, various embodiments of the present disclosure will be described in detail with reference to the accompanying drawings so that those skilled in the art can easily carry out them. The present disclosure can be modified in various different ways, and is not limited to the embodiments set forth herein.

In the following, particular aspects illustrated in the accompanying drawings are described in detail. The drawings are intended to help understanding the present invention. Herein and in the drawings, same reference sign or a series of reference signs may be used to indicate a same, similar or analogical element in different examples.

Unless indicated otherwise or technically inappropriate, the examples described below with reference to the drawings can include any, some or all of the features described above, and a repetitive description is omitted. For the sake of brevity and efficiency of the description, the examples described below with reference to the drawings can include any, some or all of the features generally described above, unless indicated otherwise or technically inappropriate. Further, the examples described below with reference to the drawings can include any, some or all of the features described with reference to the respectively previous example, unless indicated otherwise or technically inappropriate. It is noted that the drawings may be not to scale. Particular features may be depicted in an enlarged or reduced manner for the sake of a clear display.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" or "comprising" a certain component, it means that the portion can further include other components, without excluding the other components, unless otherwise stated.

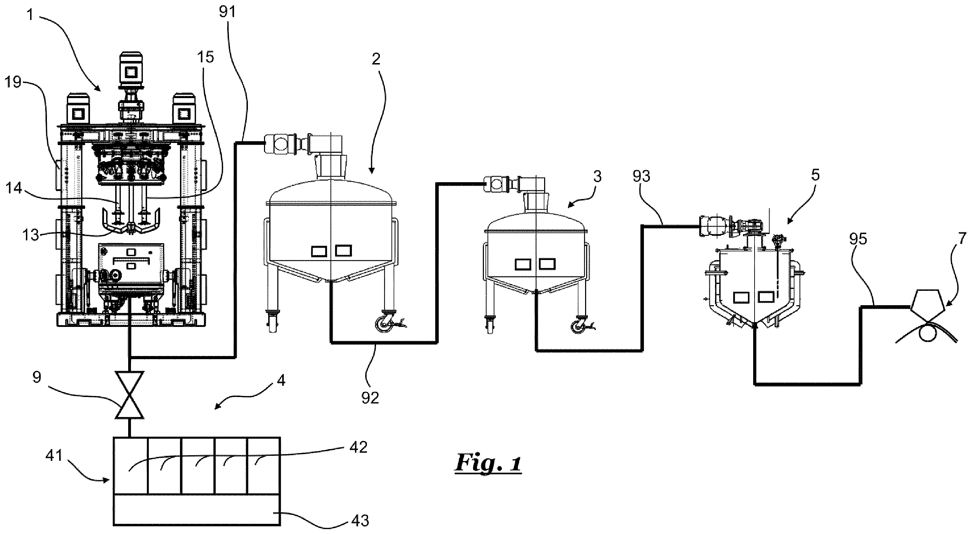

FIG. 1 is a schematic illustration of a battery manufacturing system according to an example. The system includes a reactor 1, several intermediate containers and intermediate conduits, a deposition device 7, a sampling unit 4 and a rheological measurement device 43.

The reactor 1 is configured for making the battery material mixture from substances including an active material, a binder and a solvent. The reactor 1 includes a stirrer 13 operable to blend substances together in order to create a battery material mixtures which may in particular be homogeneous. A reactor 1 including a stirrer 13 may be called a main mixer. The reactor may include one or more injection devices 14,15. In the illustrated example, a first injection device 14 is provided for supplying active material powder to the reactor, a second injection device 15 is provided for supplying solvent, and a third injection device for supplying binder (not shown).

The reactor 1 may be provided with a reactor control unit 19. The reactor control unit 19 is configured to control providing the substances to the reactor 1 according to a recipe. Such a reactor control unit 19 may be connected to at least one measurement device to receive information about the content of at least one substance in the battery material mixture. Alternatively or additionally, the reactor control unit 19 may be connected to at least one injection device 14, 15 to control the amounts of the substances inserted into the reactor 1. Further alternatively or additionally, the reactor control unit 19 may be configured to control the operation of the stirrer 13.

The deposition device 7 is configured for coating an electrode substrate with a layer of the battery material mixture. The system may include further components for processing the electrode substrate, for example for guiding the electrode substrate and for curing the battery material mixture coated onto one or both sides of the electrode substrate to form an active material layer.

The battery manufacturing system comprises several intermediate containers realized as tanks 2, 3, 5. A storage tank 2 is connected to the reactor 1 to receive the mixture directly from the reactor 1. The storage tank 2 is an intermediate container configured for the initial storage of slurry made in the mixer or reactor 1. The system comprises several intermediate conduits 91, 92, 93, 95. The reactor conduit 91 couples the storage tank 2 to the reactor 1.

A transfer tank 3 is connected on the one hand to the storage tank 2 and on the other hand to a respective deposition unit. The transfer tank 3 is an intermediate container that stores slurry from the storage tank 2 as a secondary storage in the line and which may supply the mixture to the downstream deposition unit. The storage tank 2 has a larger volume than the transfer tank 3.

A supply tank 5 is configured to provide the mixture directly to a respective deposition device. Each supply tank 5 is an intermediate container that may temporarily store slurry as a tertiary storage in the line and configured to supply the mixture to the coater die or other deposition device 7. The supply tank 5 is associated with the production line. Optionally, a second supply tank and optionally a second transfer tank and/or a second storage tank, may be associated with a second production line (not shown). A first line and a second line of the system may both be fed from the same storage tank 2. The transfer tank 3 has a larger volume than the supply tank 5.

In the present example, a storage conduit 92 couples the transfer tank 3 to the storage tank 2. A transfer conduit 93 couples the supply tank 5 to the transfer tank 3. Further, a supply conduit 95 couples the deposition device 7 to the supply tank 5. Alternatively, a supply tank could be coupled directly to a respective deposition device without a conduit therebetween.

It shall be clear that a battery manufacturing system may comprise only one line, only two lines, or more than two lines. In case of only one single production line, such as shown in Fig. 1, the storage tank 2 could be identified as a first intermediate container, the transfer tank 3 could be identified as a second intermediate container, and the supply tank 5 could be identified as a third intermediate container. The number of intermediate containers and intermediate conduits may differ from the illustrated example. For example, a battery manufacturing system could include no intermediate container but only intermediate conduits to convey the battery material mixture directly from the reactor 1 to the deposition device or devices 7.

The illustrated exemplary system includes a measurement device for determining a physical property of the battery material mixture represented by a rheological measuring device 43. The rheological measuring device 43 may be a rheometer. The rheological measuring device 43 may for example include a first rheological sensor configured for determining a viscosity, in particular a dynamic viscosity, a kinematic viscosity or a static viscosity, of the battery material mixture or a second rheological sensor configured for determining a viscoelasticity of the battery material mixture, or both.

The rheological measuring device 43 may be connected to the reactor conduit 91 which leads from the reactor 1 to the storage tank 2 downstream thereof. The measuring device 43 may be configured to measure the rheological property of the mixture supplied to the system by the reactor 1.

It shall be clear that the system may alternatively comprise more and/or different measuring devices for measuring one or more, in particular different, physical properties of the battery material mixture (not shown). Furthermore, it shall be clear that while the measuring device 43 is shown to be connected to a junction in the first intermediate conduit 91, the one or more measuring devices may additionally or alternatively be connected to any intermediate conduit or intermediate container in the production line downstream of the reactor 1 (not shown in further detail). One or more measuring devices may be attached a transfer tank 3 or to another intermediate container and configured to measure the rheological property of the mixture contained in therein.

The measuring device, in particular rheological measuring device 13, is coupled to the reactor control unit 19 and configured to provide its determined rheological property to the reactor control unit 19. The reactor control unit 19 is configured to modify the control of the reactor 1. In particular, the reactor control unit 19 may be configured to modify the composition of the battery material mixture in the reactor 1 based on the rheological property determined by the at least one measuring device by controlling the injection devices 13, 14 appropriately. The reactor control unit 19 receives information regarding the rheological property of the mixture. The reactor may control the injection device or injection devices 13, 14 to modify the composition as a function of the rheological property. The reactor control unit 19 may for example be configured to modify a temperature of the reactor 1, a duration of a mixing step 10 and/or a mixing rate, for example a rotary velocity of a stirrer 13, of the reactor 1 as a function of the physical properties, in particular the rheological properties.

The illustrated exemplary system includes a sampling unit 4 which is configured to provide a sample portion from the mixture in the first intermediate conduit 91 for the at least one measuring device. As indicated above, one or more sampling units could be connected to one or more of the intermediate conduits 91, 92, 93, 95 or intermediate containers in order to provide a sample portion of the mixture contained therein for a respective measuring device (not shown).

The sampling unit 4 comprises a valve 9. The valve 9 may be configured to enable and disable a flow of the battery material mixture from the intermediate conduit 91. The valve 9 may be controlled, for example by the reactor control unit 19, to obtain one or more sample portions having a predetermined sample size, for example in the range of 20 mL to 30 mL.

The sampling unit 4 may be configured to separate a sample portion of the mixture from the at least one intermediate conduit 91 at a ratio in the range of 0.01 to 0.05 in relation to the mass flow of the battery material mixture entering the intermediate conduit 91 from the reactor 1. The sampling unit may include a probe head extending into the at least one intermediate conduit in order to divert some of the mass flow of the battery material mixture conveyed within the intermediate conduit 91. Alternatively, the intermediate conduit may be provided with a junction (for example a T-junction orY-junction) for diverting a portion of the battery material mixture from the main flow of the battery material mixture through the production line. In the illustrated embodiment of Fig. 1, the sample unit 4 is branched of from the first intermediate conduit 91 at a T-junction. The size of the branching conduit may be dimensioned to have a smaller cross section than the main diameter of the intermediate conduit to affect the ratio at which battery material is diverted from the main flow towards the measuring device 43.

The sample unit 4 may be equipped with a reception 42 for receiving the sample portion. The reception 42 may have a reception volume (e.g. 25 mL) corresponding to the predetermined sample size. The volume of the reception 42 may be dimensioned to determine the predetermine sample size. The reception 42 may be a container for storing the battery material mixture sampled by the sample unit 4 in a sealing manner. For example, the reception 42 may be configured to hermetically seal the sample portion. The reception 42 may be configured to be selectively connectable with the production line via the valve 9. Alternatively or additionally, the reception 42 may be configured to be selectively connectable with the at least one measuring device 43.

In the illustrated embodiment, the sampling unit 4 comprises a sample magazine 41 which includes a multitude of receptions 42 for storing different sample portions provided by the sampling unit 4. For example the sample magazine 41 may include two, three, four or five individual receptions 42, or more individual receptions 42, each configured for receiving a respective sample portion of a predetermined sample size of the battery material mixture.

The magazine 41 may be configured such that only one of the plurality of receptions 42 is in fluid communication with the valve 4 at any given time. The magazine 41 may be controlled, for example by the reactor control unit 19, to connect an empty reception with the valve 4 such that a sample portion of the battery material mixture can be provided to the reception 42 via the valve 4 in an opened state thereof. The magazine 41 may be adapted to the valve 4 such that a step of switching from a first, loaded reception 42 to a second, empty reception is performed exclusively in a closed state of the valve 4. Opening the valve 4 to provide a sample portion may be performed intermittently, for example only once per day, such that a plurality of receptions 42 in the magazine 41 may contain sample portions from a number of different days.

The reactor control unit 19 may be connected with the sampling unit to receive at least one physical property of a sample portion contained within the one or more receptions 42. For example, in case sampling occurs once per day, the reactor control unit 19 may receive the at least one physical property once per day. The physical properties determined on different days may be evaluated, in particular in the reactor control unit 19, in order to determine whether or not and/or how a modification of the reactor control shall occur. The reactor control unit 19 may for example be configured to modify a temperature of the reactor 1, a duration of a mixing step and/or a mixing rate, for example a rotary velocity of a stirrer 13, of the reactor 1 as a function of the physical properties, in particular the rheological properties, of the sample portions of battery material mixture in the sampling unit 4.

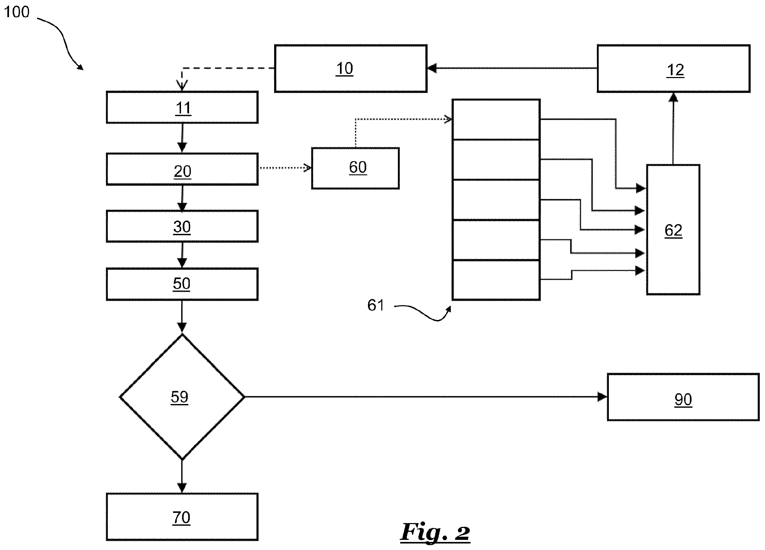

FIG. 2 is a schematic diagram of a battery manufacturing method according to an example.

The battery manufacturing method 100 comprises preparing a battery material mixture. Additionally, it may comprise coating an electrode substrate with an active material layer after preparing the battery material mixture.

Preparing the battery material mixture includes making (mixing) 10 a battery material mixture from substances including an active material, a binder and a solvent and possibly further substances. The making 10 of the battery material mixture may include a mechanical mixing step such as stirring or kneading the substances to form the battery material mix. The mixing step may be performed according to one or more mixing parameters determined by the reactor control unit 19, such as a temperature of the reactor, a duration of a mixing step and/or a mixing rate, for example a rotary velocity of a stirrer.

Preparing may include providing 11 at least one or more of the substances designated to be mixed, particularly to the reactor 1. In particular, preparing may include providing 11 of at least one active material, at least one binder and at least one solvent. The providing 11 of the at least one substance may be conducted in accordance with a predetermined recipe for a battery material mixture. Providing 11 may include providing a first predetermined amount of a first substance, particularly active material, providing a second predetermined amount of a second substance, particularly solvent, and providing a third predetermined amount of a third substance, particularly binder, for the subsequent making 10 of the battery material mixture, in particular in accordance with an appropriate composition associated with to the recipe. Providing the active material, the at least one binder and the at least one solvent may be performed in consideration of previously determined material properties.

During the in the battery manufacturing process 100, the raw substances are inserted and mixed 10 in the reactor 1 to create a battery material mixture. The different substances are provided 11 in accordance with a predetermined recipe to produce a uniform mixture which may be optimized for further processing in subsequent steps of depositing the slurry onto an electrode substrate and curing the battery material mixture to create an active material layer on the electrode substrate.

Preparing the battery material mixture may include measuring 62 a rheological property of the battery material mixture. Measuring of the rheological property of at least one substrate in the battery material mixture may be performed downstream of the location where the making 10 of the battery material mixture is performed, for instance downstream from a reactor 1. Measuring of the rheological property of at least one substrate in the battery material mixture may be performed upstream of the location where applying 70 of the of the battery material mixture onto an electrode substrate is performed, for instance upstream from a deposition device 7, such as a die coater.

Preparing the battery material mixture may include one or more instances of conveying 20, 30, 50 the battery material mixture from the reactor to the deposition device. Conveying of the battery material can take place in at least one of an intermediate container or an intermediate conduit.

Preparing may include a (first) step of conveying 20 the battery material mixture through a storage tank 2. Preparing may include a (second) step of conveying 30, 40 the battery material mixture through a transfer tank 3, 4. Additionally, the method may also include a (third) step of conveying 50 of the battery material mixture through a supply tank 5.

Sampling 60 may be performed during conveying 20, 30, 50 of the battery material mixture. Sampling may be performed at different locations in a system for preparing a battery material mixture. Sampling (or: providing 60 of a sample portion of the battery material mixture) may be performed by receiving or extracting the sample portion from the intermediate conduit or intermediate container.

As indicated above, sampling may be performed by opening a valve 4 between the production line and the measurement device 43 such that a sample portion of the battery material mixture may leave the production line through an egress, such as a Tjunction in the first intermediate conduit 91. The sample portion may be received for storing 61 in at least one reception 42. A magazine 41 comprising a plurality of receptions 42 may be provided such that the sampling unit 4 can be storing 61 a plurality of individual sample portions.

In the illustrated example, the method may for example include measuring 62 the physical property, in particular the rheological property, of the battery material mixture. It may be preferred that measuring 62 is performed on one or more individual sample portions of the battery material mixture. The measuring 62 may be conducted intermittently, in particular at regular intervals, for example once per day.

The battery manufacturing method 100 according to the exemplary embodiment of Fig. 2 further comprises modifying 12 the reactor control, for example the provision 11 of at least one of the substances for the preparing 10, as a function of the rheological property measured in at least one step of measuring 62.

Modifying 12 the provision 11 of at least one of the substances may for example include modifying the composition of the substances emitted by the injection devices 13, 14 or controlling one of the injection devices to insert an additional portion of a specific substance. Modifying 12 can be performed intermittently, in particular at predetermined time-intervals, or caused in case the measuring has identified a significant deviation of the rheological property of a substance in the mixture from a desired (target) rheological property. If the viscosity is determined to be higher than a target value or target range, the amount of solvent provided to the mixture may be increased for future preparation. If the viscosity is determined to be lower than a target value or target range, the amount of solvent provided to the mixture may be reduced for future preparation.

After the preparing of the mixture is done, and before the mixture is dispensed by a deposition device 7, a determination 59 of at least one battery material mixture property may be performed. For example, the viscosity, particularly the dynamic viscosity, of the battery material mixture may be determined as a material property.

Determining 59 the at least one material property may be performed after preparing the mixture. In particular, determining 59 the at least one material property may be performed with respect to the mixture contained in a deposition device 7, or in a supply tank 5 of a deposition unit. Based on the result of determining 59 the at least one material parameter, the battery mixture may then be applied 70 onto the electrode substrate by the respective deposition unit, in case the material property is determined to meet predefined quality requirements. Alternatively, the battery mixture may be discharged 90 on the basis of the determining 59, in case the material property is determined to be below a minimum quality requirement.

As mentioned, the features as detailed above with respect to the battery manufacturing system as disclosed herein may also apply accordingly to the battery manufacturing method. A repetitive description is omitted for the sake of conciseness.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### LIST OF REFERENCE SIGNS

- 1: reactor
- 2: storage tank
- 3: first transfer tank
- 5: first supply tank
- 7: deposition device
- 9: valve
- 10: mixing
- 11: providing substances
- 12: modifying composition
- 13: stirrer
- 14: first injection device
- 15: second injection device
- 19: reactor control unit
- 20: conveying
- 30: conveying
- 40: conveying
- 41: magazine
- 42: reception
- 43: measuring device
- 50: conveying
- 59: battery mix property determination
- 60: providing at least one sample portion
- 61: sample storing
- 62: measuring
- 70: application
- 90: discharge
- 91: reactor conduit
- 92: storage conduit
- 93: transfer conduit
- 95: supply conduit
- 100: battery manufacturing method

## Claims

1. A battery manufacturing system comprising:
at least one intermediate conduit (91, 92, 93, 95) or intermediate container configured to receive a battery material mixture from a reactor (1) configured for making the battery material mixture; and
at least one measuring device configured to determine a physical property of the mixture in the at least one intermediate conduit (91, 92, 93, 95) or intermediate container downstream of the reactor (1).

2. The battery manufacturing system of claim 1, further comprising
a sampling unit (4) configured to provide a sample portion from the mixture in the one at least one intermediate conduit (91, 92, 93, 95) or intermediate container for the at least one measuring device.

3. The battery manufacturing system of claim 2, wherein
the sampling unit (4) comprises a valve (9) configured to enable and disable a flow of the battery material mixture from the intermediate conduit (91, 92, 93, 95) or intermediate container to which the sampling unit (4) is connected.

4. The battery manufacturing system of claim 2 or 3, wherein
the sampling unit (4) is configured to provide one or more sample portions having a predetermined sample size; and/or wherein
the sampling unit (4) is configured to separate a sample portion of the mixture from the at least one intermediate conduit (91, 92, 93, 95) or intermediate container at a ratio in the range of 0.001 to 0.1, or 0.01 to 0.05, in relation to the mass flow of the battery material mixture in the intermediate conduit (91, 92, 93, 95) or intermediate container.

5. The battery manufacturing system of any one of claim 2 to 5, wherein
the sampling unit (4) comprises sample magazine (41) which includes a multitude of receptions for storing different sample portions provided by the sampling unit (4).

6. The battery manufacturing system of one of the preceding claims, further comprising
the reactor (1) configured for making the battery material mixture from substances including an active material, a binder and a solvent,
a reactor control unit (19) configured to control providing the contents to the reactor (1), and
wherein the at least one measuring device is coupled to the reactor control unit (19), and wherein the reactor control unit (19) is configured to modify a control of the reactor based on the physical property determined by the at least one measuring device.

7. The battery manufacturing system of claim 6,
wherein the reactor control unit (19) is configured to intermittently receive information regarding the physical property from the at least one measuring device and/or configured to modify the control of the reactor as a function of the physical property.

8. The battery manufacturing system of one of the preceding claims,
wherein the at least one measuring device is a rheological measuring device (43) selected from a group comprising a viscosity sensor configured to determine a viscosity of the mixture, and a viscoelasticity sensor configured to determine a viscoelasticity of the mixture.

9. The battery manufacturing system of one of the preceding claims,
wherein the at least one measuring device is connected to an intermediate conduit (91, 92, 93, 95) between the reactor (1) and an intermediate container selected from a group comprising a storage tank (2) configured to receive the mixture directly from the reactor (1), a supply tank (5) configured to provide the mixture directly to a deposition device (7) and, a transfer tank (3) configured to receive the mixture from the storage tank (2) and to provide the mixture to the supply tank (5).

10. A battery manufacturing method (100), comprising:
preparing a battery material mixture;
making (10) a battery material mixture from substances including an active material, a binder and a solvent in a reactor (1) during the preparing; and
measuring (62) a physical property of the battery material mixture in a conduit (91, 92, 93, 95) or container downstream of the reactor (1) during the preparing.

11. The battery manufacturing method (100) according to claim 10, further comprising:
providing (60) at least one sample portion from the mixture in the one at least one intermediate conduit (91, 92, 93, 95) or intermediate container for measuring by at least one measuring device.

12. The battery manufacturing method (100) according to claim 11, wherein
the providing (60) at least one sample portion includes separating the sample portion from the mixture in the one at least one intermediate conduit (91, 92, 93, 95) or intermediate container.

13. The battery manufacturing method (100) according to claim 12, wherein
the separating the sample portion includes
operating a valve to enable and disable a flow of the battery material mixture from the intermediate conduit (91, 92, 93, 95) or intermediate container to which the sampling unit (4) is connected attached, in particular a flow to the measuring device or sample magazine.

14. The battery manufacturing method (100) according to claim 12 or 13, wherein
the separating the sample portion includes
drawing a sample portion of a predetermined sample size from the flow of the mixture in the one at least one intermediate conduit (91, 92, 93, 95) or intermediate container; and/or
diverting a sample portion of the mixture from the at least one intermediate conduit (91, 92, 93, 95) or intermediate container at a ratio in the range of 0.001 to 0.1, or 0.01 to 0.05, in relation to the mass flow of the battery material mixture in the intermediate conduit (91, 92, 93, 95) or intermediate container.

15. The battery manufacturing method (100) according to one of the claims 10 to 14, further comprising
modifying (12) making (10) the battery material mixture as a function of the measured physical property.

16. The battery manufacturing method (100) according to claim 15,
wherein the measuring (62) is conducted intermittently and/or
wherein the provision (10) of at least one of the substances for the preparing is determined as a function of the measuring (62).

17. The battery manufacturing method (100) according to claim 15 or 16,
wherein the function of the measuring is configured to include a comparison of physical properties associated with a plurality of different sample portions.

18. The battery manufacturing method (100) according to one of the claims 10 to 17,
wherein the measuring (62) includes at least one of measuring a viscoelasticity of the mixture and measuring a viscosity of the mixture.

## Amended claims

### Amended claims in accordance with Rule 137(2) EPC.

1. A battery manufacturing system comprising:
at least one intermediate conduit (91, 92, 93, 95) or intermediate container configured to receive a battery material mixture from a reactor (1) configured for making the battery material mixture; and
at least one measuring device configured to determine a physical property of the mixture in the at least one intermediate conduit (91, 92, 93, 95) or intermediate container downstream of the reactor (1), further comprising
a sampling unit (4) configured to provide a sample portion from the mixture in the one at least one intermediate conduit (91, 92, 93, 95) or intermediate container for the at least one measuring device, wherein
the sampling unit (4) comprises a valve (9) configured to enable and disable a flow of the battery material mixture from the intermediate conduit (91, 92, 93, 95) or intermediate container to which the sampling unit (4) is connected,
wherein the valve (9) is configured to open an egress of the intermediate conduit or intermediate container such that the battery material mixture can exit from the intermediate conduit or intermediate container.

2. The battery manufacturing system of claim 1, wherein
the sampling unit (4) is configured to provide one or more sample portions having a predetermined sample size; and/or wherein
the sampling unit (4) is configured to separate a sample portion of the mixture from the at least one intermediate conduit (91, 92, 93, 95) or intermediate container at a ratio in the range of 0.001 to 0.1, or 0.01 to 0.05, in relation to the mass flow of the battery material mixture in the intermediate conduit (91, 92, 93, 95) or intermediate container.

3. The battery manufacturing system of any one of claim 1 or 2, wherein
the sampling unit (4) comprises a sample magazine (41) which includes a multitude of receptions for storing different sample portions provided by the sampling unit (4).

4. The battery manufacturing system of one of the preceding claims, further comprising
the reactor (1) configured for making the battery material mixture from substances including an active material, a binder and a solvent,
a reactor control unit (19) configured to control providing the contents to the reactor (1), and
wherein the at least one measuring device is coupled to the reactor control unit (19), and wherein the reactor control unit (19) is configured to modify a control of the reactor based on the physical property determined by the at least one measuring device.

5. The battery manufacturing system of claim 4,
wherein the reactor control unit (19) is configured to intermittently receive information regarding the physical property from the at least one measuring device and/or configured to modify the control of the reactor as a function of the physical property.

6. The battery manufacturing system of one of the preceding claims,
wherein the at least one measuring device is a rheological measuring device (43) selected from a group comprising a viscosity sensor configured to determine a viscosity of the mixture, and a viscoelasticity sensor configured to determine a viscoelasticity of the mixture.

7. The battery manufacturing system of one of the preceding claims,
wherein the at least one measuring device is connected to an intermediate conduit (91, 92, 93, 95) between the reactor (1) and an intermediate container selected from a group comprising a storage tank (2) configured to receive the mixture directly from the reactor (1), a supply tank (5) configured to provide the mixture directly to a deposition device (7) and, a transfer tank (3) configured to receive the mixture from the storage tank (2) and to provide the mixture to the supply tank (5).

8. A battery manufacturing method (100), comprising:
preparing a battery material mixture;
making (10) a battery material mixture from substances including an active material, a binder and a solvent in a reactor (1) during the preparing; and
measuring (62) a physical property of the battery material mixture in a conduit (91, 92, 93, 95) or container downstream of the reactor (1) during the preparing,
further comprising:
providing (60) at least one sample portion from the mixture in the one at least one intermediate conduit (91, 92, 93, 95) or intermediate container for measuring by at least one measuring device, wherein
the providing (60) at least one sample portion includes separating the sample portion from the mixture in the one at least one intermediate conduit (91, 92, 93, 95) or intermediate container, wherein
the separating the sample portion includes
operating a valve to enable and disable a flow of the battery material mixture from the intermediate conduit (91, 92, 93, 95) or intermediate container to which the sampling unit (4) is connected attached,
wherein operating the valve (9) comprises opening an egress of the intermediate conduit or intermediate container such that the battery material mixture exits from the intermediate conduit or intermediate container.

9. The battery manufacturing method (100) according to claim 8, wherein
the separating the sample portion includes
operating a valve to enable and disable a flow to the measuring device or a sample magazine.

10. The battery manufacturing method (100) according to claim 8 or 9, wherein
the separating the sample portion includes
drawing a sample portion of a predetermined sample size from the flow of the mixture in the one at least one intermediate conduit (91, 92, 93, 95) or intermediate container; and/or
diverting a sample portion of the mixture from the at least one intermediate conduit (91, 92, 93, 95) or intermediate container at a ratio in the range of 0.001 to 0.1, or 0.01 to 0.05, in relation to the mass flow of the battery material mixture in the intermediate conduit (91, 92, 93, 95) or intermediate container.

11. The battery manufacturing method (100) according to one of the claims 8 to 10, further comprising
modifying (12) making (10) the battery material mixture as a function of the measured physical property.

12. The battery manufacturing method (100) according to claim 11,
wherein the measuring (62) is conducted intermittently and/or
wherein the provision (10) of at least one of the substances for the preparing is determined as a function of the measuring (62).

13. The battery manufacturing method (100) according to claim 11 or 12
wherein the function of the measuring is configured to include a comparison of physical properties associated with a plurality of different sample portions.

14. The battery manufacturing method (100) according to one of the claims 8 to 13,
wherein the measuring (62) includes at least one of measuring a viscoelasticity of the mixture and measuring a viscosity of the mixture.
